# EUROPEAN PATENT APPLICATION

(11) **EP 4 496 092 A1**
(43) Date of publication of application: **22.01.2025**
(21) Application number: 23770258.4
(22) Date of filing: 16.02.2023
(51) Int. Cl.: H01M 50/213, H01M 50/289, H01M 50/291, H01M 50/293

(54) **BATTERY PACK**

(30) Priority: 18.03.2022 JP 2022044337
(71) Applicant: Panasonic Energy Co., Ltd., Osaka 570-8511 (JP)
(72) Inventor: TAKEDA, Kensaku, Kadoma-shi, Osaka 571-0057 (JP); WAKABAYASHI, Takeaki, Kadoma-shi, Osaka 571-0057 (JP)
(74) Representative: Novagraaf International SA
(86) International application number: PCT/JP2023/005585
(87) International publication number: WO 2023/176298

(57) **Abstract**

A battery pack includes a battery holder that holds a plurality of secondary battery cells. The battery holder is divided into a first holder and a second holder, and is configured to hold each of the plurality of secondary battery cells in a cell housing space formed by joining the first holder and the second holder. The first holder includes a plurality of holding curved surfaces each of which individually holds at least a part of a cylindrical side surface of a corresponding one of the plurality of secondary battery cells, and a first end surface plate to which end edges of the plurality of holding curved surfaces are fixed. The first holder defines insertion gaps between adjacent holding curved surfaces of the plurality of holding curved surfaces. The second holder includes a plurality of insertion pieces that is inserted into a respective one of the insertion gaps in a state of being joined to the first holder, and a second end surface plate to which end edges of the plurality of insertion pieces are fixed.

## Description

### TECHNICAL FIELD

The present disclosure relates to a battery pack.

### BACKGROUND ART

A battery pack in which a large number of secondary battery cells are connected in series and in parallel is used as a power source for a portable electric device such as an electric cleaner or an electric power tool, or as a backup power source for a server or a power source for home use, business use, or factory use in stationary storage applications, and is also used as a power source for driving an assist bicycle, or a power source for driving an electric scooter, an electric cart, or a vehicle such as a hybrid vehicle or an electric vehicle. This kind of battery pack has a structure in which a core block provided with a plurality of secondary battery cells held at fixed positions by a battery holder is housed in an exterior case constituting an outer shape of the battery pack in many cases (e.g., PTL 1).

Although a lithium-ion secondary battery is generally used as a secondary battery cell used in a battery pack, the lithium-ion secondary battery may cause an unsafe event accompanied by smoking or ignition due to some abnormality such as penetration of a bolt at the time of collision. To prevent high temperature from reaching other adjacent secondary battery cells if an unsafe event occurs in any of the secondary battery cells to cause the high temperature, a heat insulation structure is required between the adjacent secondary battery cells. For this reason, a structure has been proposed in which a plate material having flame retardancy is inserted between adjacent secondary battery cells.

Unfortunately, this configuration requires work of additionally inserting a plate material, which is a separate member, into the battery holder. The battery holder is thus required to provide a gap for inserting the plate material in advance between the adjacent secondary battery cells, thereby causing an increase in manufacturing cost of the battery pack.

### Citation List

### Patent Literature

PTL 1: International Publication No. WO 2019/208217

### SUMMARY OF THE INVENTION

It is an object of the present disclosure to provide a battery pack in which a plate material is disposed between adjacent secondary battery cells with a simple structure to improve heat insulating properties.

A battery pack according to an aspect of the present disclosure includes: a plurality of secondary battery cells each having an outer shape in a cylindrical shape and at least one of end surfaces as an electrode surface; and a battery holder that holds the plurality of secondary battery cells. The battery holder is divided into a first holder and a second holder, and is configured to hold each of the plurality of secondary battery cells in a corresponding one of cell housing spaces formed by joining the first holder and the second holder. The first holder includes a plurality of holding curved surfaces that individually hold the plurality of secondary battery cells in each of which at least a part of a cylindrical side surface of a corresponding one of the plurality of secondary battery cell is held in the holding curved surface, and a first end surface plate to which end edgers of the plurality of holding curved surfaces are fixed. The first holder defines insertion gaps between holding curved surfaces adjacent to each other of the plurality of holding curved surfaces. The second holder includes a plurality of insertion pieces that are each inserted into a respective one of the insertion gaps in a state of being joined to the first holder, and a second end surface plate to which end edges of the plurality of insertion pieces are fixed.

The battery pack according to an aspect of the present disclosure enables the insertion piece to be interposed between the secondary battery cells adjacent to each other only by joining the first holder and the second holder. In particular, not only the two holding curved surfaces but also the insertion piece is interposed between the secondary battery cells adjacent to each other, and thus enabling improvement in heat insulating properties between the secondary battery cells with a simple structure.

### BRIEF DESCRIPTION OF THE DRAWINGS

Fig. 1 is an external perspective view illustrating a battery pack according to an exemplary embodiment of the present disclosure.
Fig. 2 is an exploded perspective view of the battery pack of Fig. 1.
Fig. 3 is a perspective view of a core block in Fig. 2.
Fig. 4 is an exploded perspective view of the core block of Fig. 3.
Fig. 5 is an exploded perspective view of the core block of Fig. 3 as viewed from behind.
Fig. 6 is a sectional perspective view of the core block of Fig. 3 taken along line VI-VI.
Fig. 7 is a sectional view of the core block of Fig. 3 taken along line VI-VI.
Fig. 8 is an exploded perspective view illustrating a battery pack according to a comparative example.
Fig. 9 is an exploded perspective view illustrating a core block in Fig. 8.
Fig. 10 is an exploded perspective view of the core block in Fig. 8.
Fig. 11 is a sectional view of the core block of Fig. 10 taken along line XI-XI.

### DESCRIPTION OF EMBODIMENT

Exemplary embodiments of the present disclosure may be specified by the following configurations and features.

A battery pack according to another aspect of the present disclosure in the above aspect may be configured such that the first holder causes each of the plurality of holding curved surfaces to cause the cylindrical side surface of corresponding one of the plurality of secondary battery cells held by the each of the plurality of holding curved surfaces to partially appear.

A battery pack according to another aspect of the present disclosure in any one of the above aspects may be configured such that the cylindrical side surface of each of the plurality of secondary battery cells includes a first side surface and a second side surface, the first side surface facing another one of the plurality of secondary battery cells adjacent to the each of the plurality of secondary battery cells, the second side surface facing no secondary battery cell adjacent to the each of the plurality of secondary battery cells, the first holder causes each of the plurality of holding curved surfaces to hold the first side surface of corresponding one of the plurality of secondary battery cells held by the each of the plurality of holding curved surfaces, and, to cause the second side surface of the corresponding one of the secondary battery cells to appear from the each one of the plurality of holding curved surfaces.

A battery pack according to still another aspect of the present disclosure in any one of the above aspects may be configured such that the first holder includes the plurality of holding curved surfaces each of which is formed with a length substantially equal to a length of the cylindrical side surface of corresponding one of the plurality of secondary battery cells.

A battery pack according to still another aspect of the present disclosure in any one of the above aspects may be configured such that the second holder includes the second end surface plate provided with ring parts into which corresponding end surfaces of the plurality of secondary battery cells are inserted. The above configuration enables end parts of the secondary battery cells to be stably held by the corresponding ring parts when the secondary battery cells are set in the second holder.

A battery pack according to still another aspect of the present disclosure in any one of the above aspects may be configured such that the first end surface plate and the second end surface plate each include an electrode window exposing an electrode on each of the end surfaces of corresponding one of the plurality of secondary battery cells.

A battery pack according to still another aspect of the present disclosure in any one of the above aspects may be configured such that the battery holder is formed of a member with heat insulating properties.

A battery pack according to still another aspect of the present disclosure in any one of the above aspects may be configured such that the battery holder includes the cell housing spaces for housing the plurality of secondary battery cells, the cell housing spaces being in a matrix arrangement, the first holder communicates with the insertion gaps each other, each of the insertion gaps being between cell housing spaces adjacent to each other in a longitudinal direction or a lateral direction of the plurality of cell housing spaces in the matrix arrangement, and the second holder includes the insertion pieces formed in a continuous planar shape to be inserted across the insertion gaps communicating in the longitudinal direction or the lateral direction. The above configuration obtains an advantage that the insertion piece is formed in a planar shape to be able to be simultaneously inserted into a plurality of insertion gaps adjacent to each other in the longitudinal direction or the lateral direction.

A battery pack according to still another aspect of the present disclosure in any one of the above aspects may be configured such that the first holder communicates with the insertion gaps each other, each of the insertion gaps being between cell housing spaces adjacent to each other in the longitudinal direction and the lateral direction of the plurality of cell housing spaces in the matrix arrangement, and the second holder includes the insertion pieces formed in a cross shape in sectional view to be inserted across the insertion gaps communicating in the longitudinal direction and the lateral direction. The above configuration enables the insertion piece to be set for the four cell housing spaces in a matrix arrangement by forming the insertion piece in a cross shape.

A battery pack according to still another aspect of the present disclosure in any one of the above aspects may be configured such that each of the insertion gaps hold the respective one of the plurality of insertion pieces in a region where any pair in the plurality of holding curved surfaces is closest adjacent to each other.

A battery pack according to still another aspect of the present disclosure in any one of the above aspects may further include a housing that internally houses the battery holder.

Exemplary embodiments of the present disclosure are described below with reference to the drawings. However, the exemplary embodiments described below are examples for embodying the technical idea of the present disclosure, and the present disclosure is not limited to the exemplary embodiments described below. The present specification does not certainly specify members indicated in the scope of claims to the members of the exemplary embodiments. In particular, the dimensions, materials, shapes, relative arrangements, and the like of the components described in the exemplary embodiment are not intended to limit the scope of the present disclosure exclusively unless otherwise specified, and are merely illustrative examples. Members shown in each drawing have sizes, positional relationships, or the like that may be exaggerated for clarity of description. The same names and reference numerals in the following description indicate the same or similar members, and detailed description thereof will not be appropriately described. Each element constituting the present disclosure may be configured such that a plurality of elements is formed of one member to allows the one member to serve as the plurality of elements, conversely, a function of one member is shared and implemented by a plurality of members.

A battery pack of the present disclosure is available as a power source for a portable electric device such as an electric cleaner or an electric power tool, or as a backup power source for a server or a power source device for home use, business use, or factory use for stationary storage, and is further used as a power source for driving an assist bicycle, an electric scooter, an electric cart, a power source for driving a vehicle such as a hybrid vehicle or an electric vehicle, or the like. Hereinafter, a battery pack used as a power source for a portable electric device will be described as an exemplary embodiment of the present disclosure.

### [First exemplary embodiment]

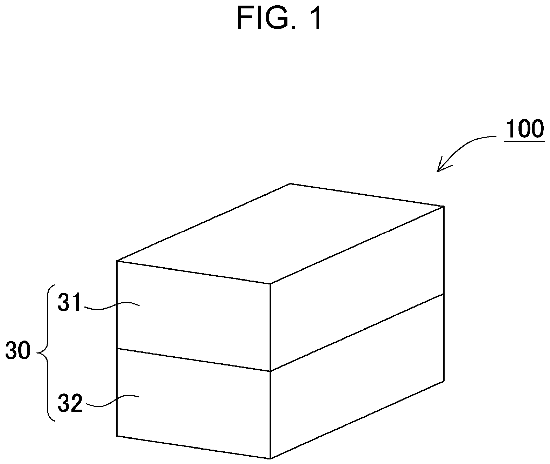

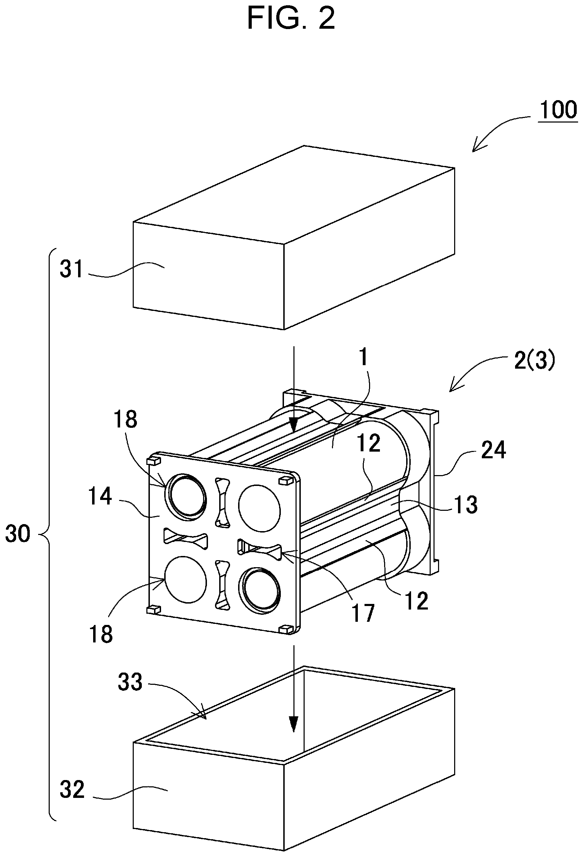

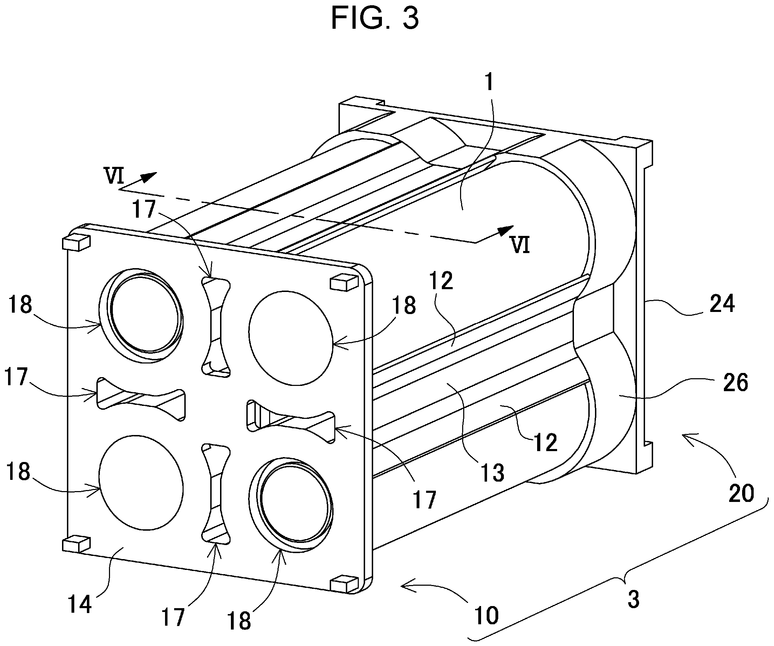

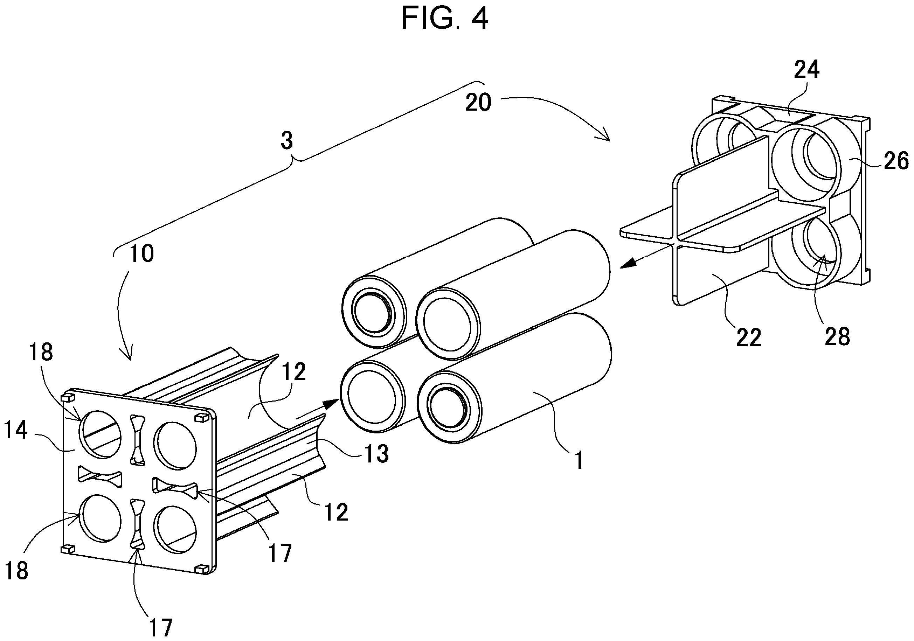

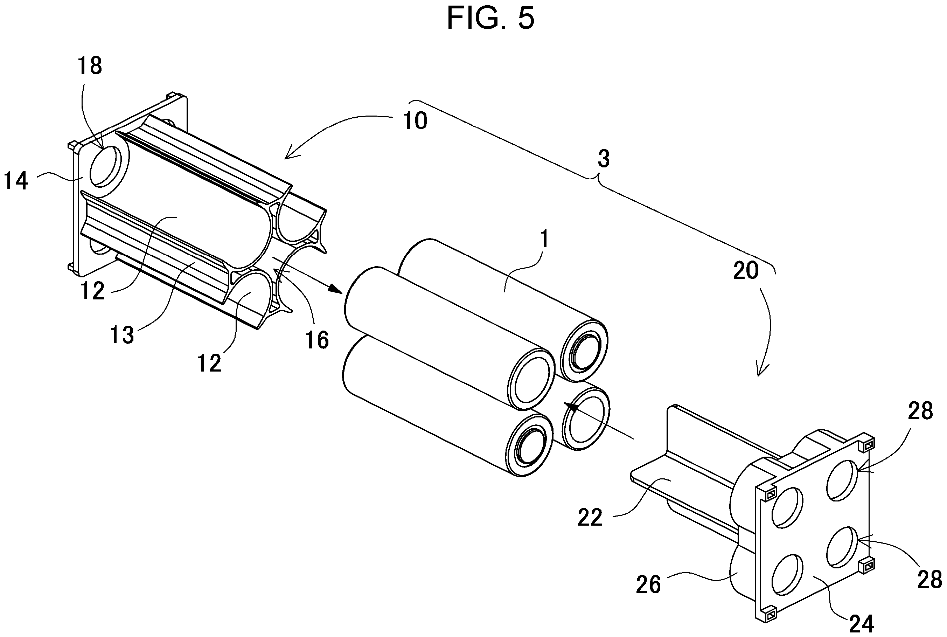

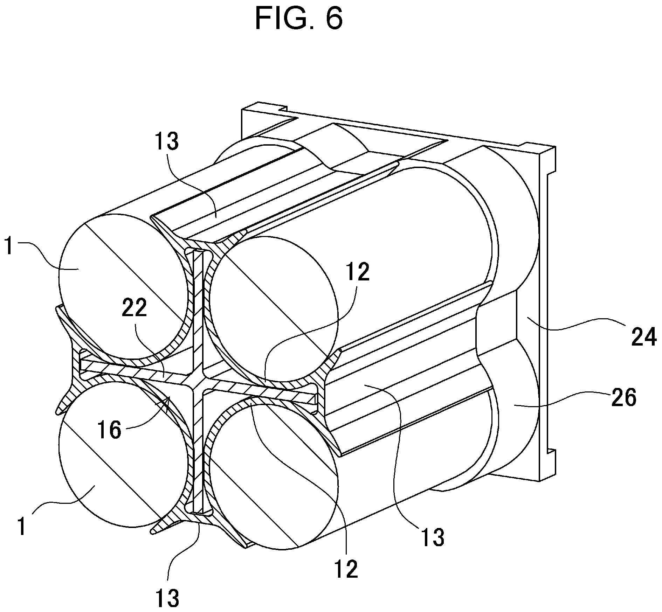

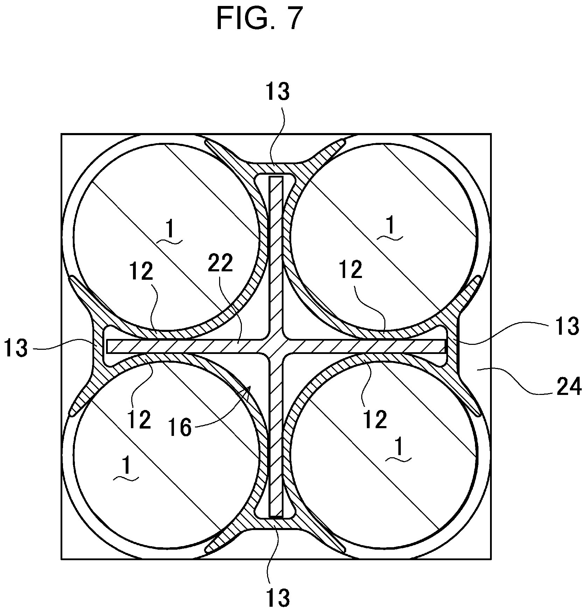

Battery pack 100 according to a first exemplary embodiment of the present disclosure is illustrated in Figs. 1 to 7. In these drawings, Fig. 1 is an external perspective view illustrating battery pack 100 according to an exemplary embodiment of the present disclosure, Fig. 2 is an exploded perspective view of battery pack 100 of Fig. 1, Fig. 3 is a perspective view of core block 2 in Fig. 2, Fig. 4 is an exploded perspective view of core block 2 of Fig. 3, Fig. 5 is an exploded perspective view of core block 2 of Fig. 3 as viewed from behind, Fig. 6 is a sectional perspective view of core block 2 of Fig. 3 taken along line VI-VI, and Fig. 7 is a sectional view of core block 2 of Fig. 3 taken along line VI-VI. Battery pack 100 illustrated in these drawings includes a plurality of secondary battery cells 1, battery holder 3, and housing 30.

### (Housing 30)

Housing 30 internally houses battery holder 3. As illustrated in Figs. 1 and 2, housing 30 has an outer shape in the shape of a box, and includes internally holder housing space 33 for housing battery holder 3. Although housing 30 is formed in a rectangular-parallelepiped shape elongated in one direction in examples of Figs. 1 and 2, housing 30 may be formed in a cubic shape. As illustrated in Figs. 2 to 7, housing 30 is here formed in a rectangular parallelepiped shape elongated in a direction of an exterior can of secondary battery cell 1 while agreeing in shape with core block 2 composed of battery holder 3 in which four secondary battery cells 1 are combined. Housing 30 is divided into first case 31 and second case 32. First case 31 and second case 32 house battery holder 3 while sandwiching battery holder 3 from above and below. Each of first case 31 and second case 32 is made of a material excellent in insulating properties, for example, a resin such as polycarbonate or ABS. First case 31 and second case 32 are fixed at four corners in plan view by screwing bolts, for example.

### (Secondary battery cell 1)

Each secondary battery cell 1 is a cylindrical secondary battery cell with an exterior can in a cylindrical shape. Each secondary battery cell 1 includes at least one of end surfaces, serving as an electrode surface. Fig. 4 shows an example in which both end surfaces serve as respective terminal surfaces. One of the terminal surfaces is provided with a safety valve. The safety valve is a member that opens when internal pressure of the exterior can increases, thereby releasing internal gas. Although the safety valve is typically provided on a positive electrode side, the present disclosure does not specify a position on the positive electrode side, at which the safety valve is provided, and thus the safety valve may be provided at another position, for example, on a negative electrode side.

Secondary battery cell 1 as described above can suitably use a lithium-ion secondary battery in a cylindrical shape.

However, the secondary battery cell of the battery pack of the present disclosure is not specified to not only a cylindrical battery, but also a lithium-ion secondary battery. Available examples of the secondary battery cell include all chargeable batteries, such as a nickel-metal hydride battery, and a nickel-cadmium battery.

### (Battery holder 3)

Battery holder 3 holds the plurality of secondary battery cells 1. As illustrated in Figs. 4 and 5, battery holder 3 is divided into two parts of first holder 10 and second holder 20. First holder 10 and second holder 20 are configured to be joined to form cell housing spaces in which the respective plurality of secondary battery cells 1 are held.

### (First holder 10)

First holder 10 includes a plurality of holding curved surfaces 12 and first end surface plate 14. Holding curved surfaces 12 individually hold the plurality of secondary battery cells 1, and thus hold at least a part of cylindrical side surfaces of respective secondary battery cell 1. First end surface plate 14 fixes end edges of the respective plurality of holding curved surfaces 12. The plurality of holding curved surfaces 12 and first end surface plate 14 are preferably integrally molded. First holder 10 is made of a material excellent in heat insulating properties, such as resin.

### (Insertion gap 16)

First holder 10 further defines insertion gap 16 between holding curved surfaces 12 adjacent to each other of the plurality of holding curved surfaces 12. As illustrated in Figs. 5 to 7, insertion gap 16 is open in a cross shape in an insertion direction of insertion piece 22. An opening in the cross shape is defined by holding curved surfaces 12 facing each other and wall part 13 connecting the holding curved surfaces. Wall part 13 does join holding curved surfaces 12 at end parts of respective holding curved surfaces 12, and joins holding curved surfaces 12 at positions slightly away from the respective end parts. This structure allows the end parts of respective holding curved surfaces 12 to be likely to be elastically deformed, and thus facilitates fitting of secondary battery cell 1 from a side surface of holding curved surface 12. The insertion gap is extended in a length direction of holding curved surface 12. Figs. 3 and 4 show an example in which first end surface plate 14 is provided with opening 17 to communicate with insertion gap 16.

This structure facilitates molding of first holder 10. However, first end surface plate 14 may be provided with no opening. First end surface plate 14 is further provided with electrode window 18 that is open to cause an electrode of secondary battery cell 1 to appear.

### (Second holder 20)

In contrast, second holder 20 includes a plurality of insertion pieces 22 and second end surface plate 24. The plurality of insertion pieces 22 is inserted into insertion gap 16 while being joined to first holder 10.

Second end surface plate 24 fixes end edges of the respective plurality of insertion pieces 22. The plurality of insertion pieces 22 and second end surface plate 24 are also preferably integrally molded. As with first holder 10, second holder 20 is made of a material excellent in heat insulation properties, such as resin. The second holder is preferably made of the same material as first holder 10.

This configuration enables insertion piece 22 to be interposed between secondary battery cells 1 adjacent to each other only by joining first holder 10 and second holder 20. In particular, not only two holding curved surfaces 12 but also insertion piece 22 is interposed between secondary battery cells 1 adjacent to each other, and thus enabling improvement in heat insulating properties between secondary battery cells 1 with a simple structure.

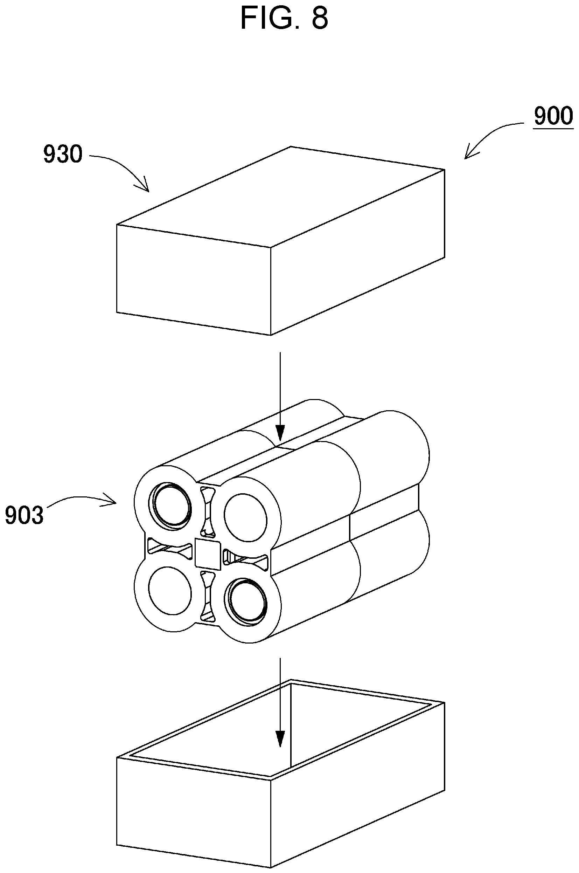

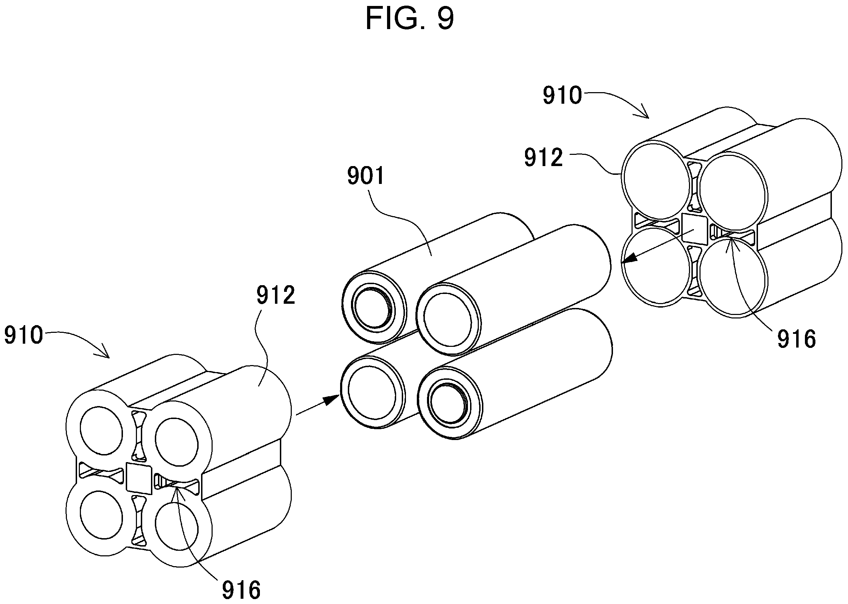

Here, one attention point of the present disclosure will be described. As illustrated in exploded perspective views of Figs. 8 and 9, battery pack 900 includes a large number of secondary battery cells 901 that are held by battery holder 903 made of resin and housed in housing 930, and battery holder 903 divided into two, and secondary battery cells 901 are inserted into tubular bodies 912 formed in respective divided holders 910 to hold secondary battery cells 901 from left and right. Battery pack 900 as described above is required to avoid so-called catching fire in which high heat propagates to other adjacent secondary battery cells when some of the secondary battery cells have a high temperature. Thus, a structure has been proposed in which a heat insulating wall is disposed between secondary battery cells adjacent to each other.

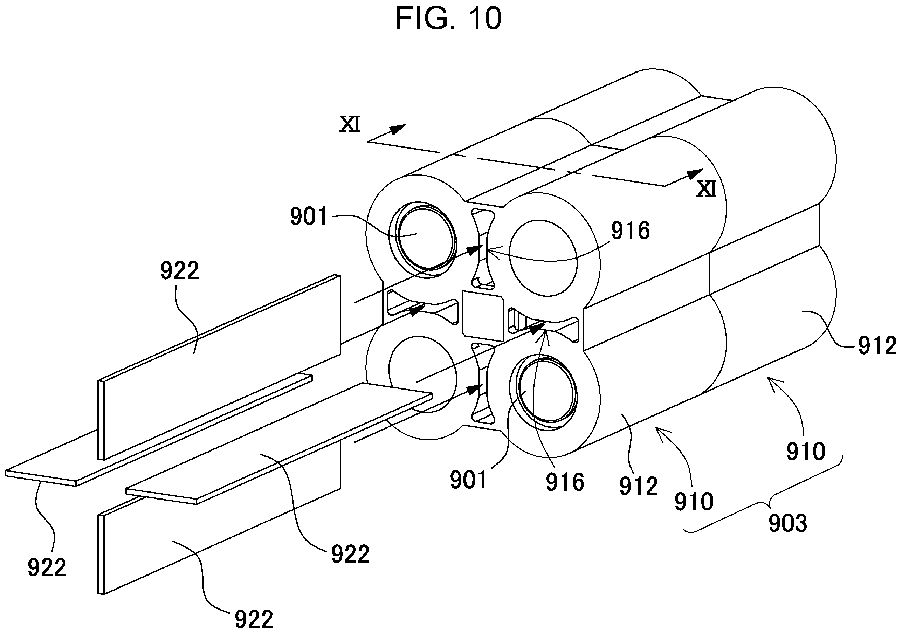

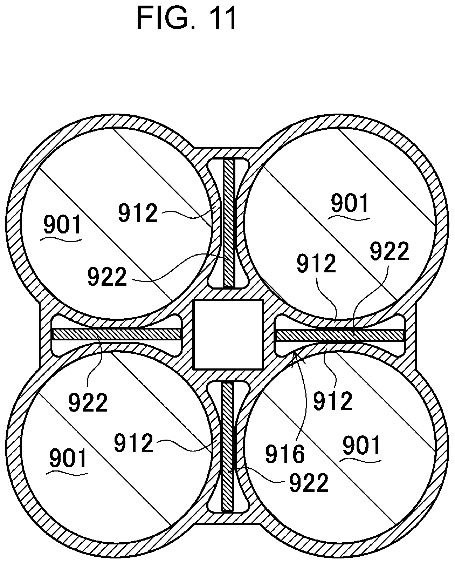

Generally, as the heat insulating wall increases in thickness, heat insulating performance can be improved more. Thus, thickening a partition wall that partitions the secondary battery cells is conceivable to allow the partition wall to serve as a heat insulating wall. However, when the partition wall of battery holder 903 made of resin is thickened, shrinkage during curing of the resin increases to deteriorate accuracy. For this reason, the partition wall made of resin cannot be increased in thickness to more than a certain thickness. Thus, providing insertion gap 916 between partition walls of tubular bodies 912 that partition secondary battery cells 901 of battery holder 903 is conceivable to insert flame-retardant plate material 922 into insertion gap 916 as illustrated in Figs. 10 and 11.

However, this configuration requires not only a plurality of plate materials 922 that are separate members from battery holder 903 to be separately prepared, but also work of inserting the plate members into respective insertion gaps 916, and thus causes a problem of increasing the number of assembling steps of the battery pack and manufacturing cost.

In contrast, division structure of battery holder 3 is devised as described above in battery pack 100 according to the present exemplary embodiment, in which first holder 10 and second holder 20, which are asymmetrically divided, are combined to allow insertion piece 22 to be inserted into insertion gap 16, and thus avoiding addition of the number of assembling steps. Additionally, a triple wall structure is formed in which insertion piece 22 is inserted into insertion gap 16 formed by two holding curved surfaces 12, thereby enhancing heat insulation between secondary battery cells 1.

First holder 10 is formed with holding curved surface 12 with a length substantially equal to a length of the cylindrical side surface of secondary battery cell 1. First holder 10 is configured to cause the cylindrical side surface of secondary battery cell 1 held by each of the plurality of holding curved surfaces 12 to partially appear from corresponding one of the plurality of holding curved surfaces 12.

Specifically, first holder 10 holds a side surface of secondary battery cell 1, the side surface facing another secondary battery cell 1 adjacent to secondary battery cell 1 and constituting the cylindrical side surface of secondary battery cell 1 held by each holding curved surface 12. In contrast, a side surface of secondary battery cell 1, which faces no secondary battery cell 1 adjacent to secondary battery cell 1, is caused to appear from battery holder 3 without being covered with holding curved surface 12. This configuration enhances moldability of first holder 10. That is, as long as battery holder 3 is configured to be divided into two at the middle in a longitudinal direction of secondary battery cell 1 as illustrated in Fig. 9, tubular body 912 can be formed with a length in each divided holder 910, the length being set to half a length of secondary battery cell 1, and thus facilitating also molding. In contrast, when the battery holder is configured to be covered with the tubular body over substantially the entire secondary battery cell in the length direction by changing a division position of the battery holder, the tubular body is increased in length to result in increasing a degree of difficulty in resin molding.

Thus, instead of covering the entire surface of the secondary battery cell with the tubular body, only a part of the secondary battery cell is covered to cause the other region to appear, and thus molding of the tubular body is avoided to facilitate resin molding. Specifically, the cylindrical side surface of secondary battery cell 1 includes a region facing another adjacent secondary battery cell 1 being a part requiring heat insulation, the region being covered with holding curved surface 12, and a part facing no secondary battery cell 1, the part being caused to appear, as illustrated in Figs. 6 and 7.

This structure ensures moldability of battery holder 3 while maintaining a heat insulating structure for preventing catching fire of secondary battery cells 1.

### (Cell housing space)

As illustrated in Figs. 6, 7, and the like, battery holder 3 includes cell housing spaces for housing the plurality of secondary battery cells 1, in a matrix arrangement. First holder 10 communicates with insertion gaps 16 through the cell housing spaces adjacent to each other in the longitudinal direction or the lateral direction of the plurality of cell housing spaces in the matrix arrangement. In contrast, second holder 20 includes insertion piece 22 formed in a continuous planar shape to be inserted across insertion gap 16 communicating in the longitudinal direction or the lateral direction. This configuration obtains an advantage that insertion piece 22 is formed in a planar shape to be able to be simultaneously inserted into a plurality of insertion gaps 16 adjacent to each other in the longitudinal direction or the lateral direction.

First holder 10 communicates with insertion gaps 16 through the cell housing spaces adjacent to each other in the longitudinal direction and the lateral direction of the plurality of cell housing spaces in the matrix arrangement. In contrast, second holder 20 includes insertion piece 22 formed in a cross shape in sectional view to be inserted across insertion gap 16 communication in the longitudinal direction and the lateral direction. This configuration enables insertion piece 22 to be set for the four cell housing spaces in a matrix arrangement by forming insertion piece 22 in a cross shape.

Insertion gap 16 holds insertion piece 22 in a region where a pair of adjacent holding curved surfaces 12 are closest adjacent to each other.

Although Fig. 7 and the like show an example in which secondary battery cells 1 are arranged in a "2 × 2" matrix, the present disclosure is not limited to this example in terms of arrangement and the number of the secondary battery cells, and the secondary battery cells may be arranged in three rows or more, three columns or more, or one row or one column, for example. Besides the matrix arrangement, the secondary battery cells may be in an offset arrangement or a staggered arrangement in which secondary battery cells adjacent to each other have centers shifted from each other. In this case, insertion piece 22 is not limited to the cross shape, and may have a V-shape, a saw blade shape, or an X-shape.

### (Ring part 26)

Second holder 20 includes second end surface plate 24 provided with ring parts 26 into which end surfaces of the plurality of secondary battery cells 1 are inserted. As illustrated in Fig. 4, each ring part 26 is formed in an annular shape so that an end surface part of the cylindrical side surface of secondary battery cell 1 can be fitted into the ring part. This configuration enables end parts of secondary battery cells 1 to be stably held by corresponding ring parts 26 when secondary battery cells 1 are set in second holder 20. In this example, the cylindrical side surface of secondary battery cell 1 includes a part near one end part, the part being covered with ring part 26 around the entire circumference, and another part covered with holding curved surface 12 around about half of the entire circumference instead of the entire circumference. Holding curved surface 12 has a length shorter than a length of secondary battery cell 1 by a length of ring part 26. In other words, the expression in the present specification, "holding curved surface 12 substantially equal in length to secondary battery cell 1", includes an aspect in which holding curved surface 12 is shorter than secondary battery cell 1 by a length obtained by subtracting a height of ring part 26.

For example, a distal end of holding curved surface 12 of first holder 10 may be press-fitted into ring part 26 together with an end surface of secondary battery cell 1. In this case, holding curved surface 12 is increased in length to approach the length of secondary battery cell 1.

As with first end surface plate 14, second end surface plate 24 is provided with electrode window 28 that is open to cause an electrode on the end surface of secondary battery cell 1 to appear.

A lead plate is fixed to the end surface of secondary battery cell 1. The plurality of secondary battery cells 1 is connected in series or in parallel using the lead plate. Fig. 4 and the like show an example in which four secondary battery cells 1 are connected in series, i.e., four connections in series, but two connections in series and two connections in parallel, or four connections in parallel are available.

The lead plate is formed of a metal plate, and is welded to secondary battery cells 1. Battery holder 3 may be provided on its outer surface or inner surface with a lead positioning guide along an outer shape of the lead plate to position the lead plate at a predetermined position. After secondary battery cell 1 is inserted into the housing space of battery holder 3, the lead plate is fixed to the terminal surface of secondary battery cell 1, the terminal surface being caused to appear from battery holder 3. Output of battery block 1c composed of secondary battery cells 1 connected in series or in parallel using the lead plate is output from battery pack 100. The lead plate may be disposed on the inner surface of battery holder 3 instead of the outer surface thereof.

Although the above example is described in which one battery holder 3 constitutes core block 2 and is housed in housing 30, the present disclosure is not limited to this configuration, and a plurality of battery holders 3 may constitute core block 2 and may be housed in a housing space of one housing 30. For example, a plurality of battery holders 3 may be connected by a fitting structure, screwing, or the like along the longitudinal direction of the secondary battery cells, may be horizontally disposed side by side in the longitudinal direction of the secondary battery cells, or may be stacked in multiple stages.

### INDUSTRIAL APPLICABILITY

The battery pack according to the present disclosure can be suitably used as a power source of a portable electric device such as an electric cleaner or an electric tool. The battery pack also can be appropriately used for applications such as a power source device for a moving body such as an assist bicycle and an electric cart.

### REFERENCE MARKS IN THE DRAWINGS

- 100: battery pack
- 1: secondary battery cell
- 2: core block
- 3: battery holder
- 10: first holder
- 12: holding curved surface
- 13: wall part
- 14: first end surface plate
- 16: insertion gap
- 17: opening
- 18: electrode window
- 20: second holder
- 22: insertion piece
- 24: second end surface plate
- 26: ring part
- 28: electrode window
- 30: housing
- 31: first case
- 32: second case
- 33: holder housing space
- 900: battery pack
- 901: secondary battery cell
- 903: battery holder
- 910: divided holder
- 912: tubular body
- 916: insertion gap
- 922: plate material
- 930: housing

## Claims

1. A battery pack comprising:
a plurality of secondary battery cells each having an outer shape in a cylindrical shape and at least one of end surfaces as an electrode surface; and
a battery holder that holds the plurality of secondary battery cells,
the battery holder being divided into a first holder and a second holder, and being configured to hold each of the plurality of secondary battery cells in a corresponding one of cell housing spaces formed by joining the first holder and the second holder,
the first holder including:
a plurality of holding curved surfaces that individually hold the plurality of secondary battery cells in each of which at least a part of a cylindrical side surface of a corresponding one of the plurality of secondary battery cells is held in the holding curved surface; and
a first end surface plate to which end edges of the plurality of holding curved surfaces are fixed,
the first holder defining insertion gaps between holding curved surfaces adjacent to each other of the plurality of holding curved surfaces, and
the second holder including:
a plurality of insertion pieces that are each inserted into a respective one of the insertion gaps in a state of being joined to the first holder; and
a second end surface plate to which end edges of the plurality of insertion pieces are fixed.

2. The battery pack according to Claim 1, wherein the first holder causes each of the plurality of holding curved surfaces to cause the cylindrical side surface of corresponding one of the plurality of secondary battery cells held by the each of the plurality of holding curved surfaces to partially appear.

3. The battery pack according to Claim 2, wherein
the cylindrical side surface of each of the plurality of secondary battery cells includes a first side surface and a second side surface, the first side surface facing another one of the plurality of secondary battery cells adjacent to the each of the plurality of secondary battery cells, the second side surface facing no secondary battery cell adjacent to the each of the plurality of secondary battery cells,
the first holder causes each of the plurality of holding curved surfaces:
to hold the first side surface of corresponding one of the plurality of secondary battery cells held by the each of the plurality of holding curved surfaces, and
to cause the second side surface of the corresponding one of the plurality of secondary battery cells, to appear from the each of the plurality of holding curved surfaces.

4. The battery pack according to any one of Claims 1 to 3, wherein the first holder includes the plurality of holding curved surfaces each of which is formed with a length substantially equal to a length of the cylindrical side surface of corresponding one of the plurality of secondary battery cells.

5. The battery pack according to any one of Claims 1 to 4, wherein the second holder includes the second end surface plate provided with ring parts into which corresponding end surfaces of the plurality of secondary battery cells are inserted.

6. The battery pack according to any one of Claims 1 to 5, wherein the first end surface plate and the second end surface plate each include an electrode window exposing an electrode on each of the end surface of corresponding one of the plurality of secondary battery cells.

7. The battery pack according to any one of Claims 1 to 6, wherein the battery holder is formed of a member with heat insulating properties.

8. The battery pack according to any one of Claims 1 to 7, wherein
the battery holder includes the cell housing spaces for housing the plurality of secondary battery cells, the cell housing spaces being in a matrix arrangement,
the first holder communicates with the insertion gaps each other, each of the insertion gaps being between cell housing spaces adjacent to each other in a longitudinal direction or a lateral direction of the plurality of cell housing spaces in the matrix arrangement, and
the second holder includes the insertion pieces formed in a continuous planar shape to be inserted across the insertion gaps communicating in the longitudinal direction or the lateral direction.

9. The battery pack according to Claim 8, wherein
the first holder communicates with the insertion gaps each other, each of the insertion gaps being between cell housing spaces adjacent to each other in the longitudinal direction and the lateral direction of the plurality of cell housing spaces in the matrix arrangement, and
the second holder includes the insertion pieces formed in a cross shape in sectional view to be inserted across the insertion gaps communicating in the longitudinal direction and the lateral direction.

10. The battery pack according to any one of Claims 1 to 9, wherein each of the insertion gaps hold the respective one of the plurality of insertion pieces in a region where any pair in the plurality of holding curved surfaces is closest adjacent to each other.

11. The battery pack according to any one of Claims 1 to 10, further comprising a housing that internally houses the battery holder.
